# EUROPÄISCHE PATENTSCHRIFT

(11) **EP 3 874 927 B1**
(45) Veröffentlichungstag und Bekanntmachung des Hinweises auf die Patenterteilung: **30.11.2022**
(21) Anmeldenummer: 20212247.9
(22) Anmeldetag: 07.12.2020
(51) Int. Cl.: A01B 79/00, A01B 69/04

(54) **VERFAHREN ZUM ERKENNEN VON FELDGRENZEN**
METHOD FOR DETECTING FIELD BOUNDARIES
PROCÉDÉ DE DÉTECTION DES LIMITES DE CHAMP

(30) Priorität: 05.03.2020 DE 102020105980
(43) Veröffentlichungstag der Anmeldung: 08.09.2021
(73) Patentinhaber: CLAAS E-Systems GmbH, 49201 Dissen (DE)
(72) Erfinder: Warkentin, Heinrich, 33330 Gütersloh (DE); Amsbeck, Janina, 49124 Georgsmarienhütte (DE); Mähler, Reinhold, 49214 Bad Rothenfelde (DE)
(74) Vertreter: CLAAS Gruppe

(56) Entgegenhaltungen:
- EP-A1- 2 257 889
- EP-B1- 3 449 286
- CN-A- 109 310 042
- US-A1- 2011 160 994
- US-A1- 2015 302 305
- US-B2- 9 933 787

## Beschreibung

Die Erfindung betrifft ein Verfahren zum Erkennen von Feldgrenzen.

Aus der EP3449286B1 ist Verfahren zum Detektieren landwirtschaftlicher, von einem Fahrzeug ausgeführter Feldarbeit bekannt. In diesem Verfahren werden mehrerer örtlich zusammenhängende benachbarte, jeweils als Ort von Feldarbeit detektierte Positionsfixe als landwirtschaftlich bearbeitetes Feld erkannt.

Nachteilig an dem bekannten Verfahren ist, dass nur Teile des Feldes auf denen Arbeit ausgeführt wird als zum Feld gehörig erkannt werden. Häufig umfasst ein Feld jedoch auch Bereiche in denen keine Feldarbeit erbracht wird. Solche Bereiche umfassen Feldteile in denen die Arbeitsmaschine ohne Arbeit zu verrichten gefahren wird.

Erfindungsgemäß ist ein Verfahren zum Erkennen von Feldgrenzen, umfassend die Schritte:
a) Analysieren einer Vielzahl von Positionsfixen und zugehörigen Zeitstempeln auf im Wesentlichen gerade Streckenabschnitte,
b) Zusammenfassen von parallelen Streckenabschnitten zu Gebieten,
c) Verlängern der geraden Streckenabschnitte,
d) Prüfen ob ein verlängerter Streckenabschnitt in einem anderen Gebiet liegt,
e) Hinzufügen des Gebietes in dem der verlängerte Streckenabschnitt liegt zu dem Gebiet zu dem der Streckenabschnitt gehört,
f) Bestimmen einer geschlossenen Feldgrenze um das Gebiet.

In Schritt a) können über die Zeitstempel zeitlich aufeinanderfolgende Positionsfixe erkannt werden. Ein Positionsfix gibt eine Position zu einem spezifischen Zeitpunkt an und kann bspw. aus einem Satelitennavigationssystem (kurz GNSS) wie GPS oder Galileo stammen. Für diese zeitlich aufeinander folgenden Positionsfixe kann dann geprüft werden, ob sie einen im Wesentlichen geraden Streckenabschnitt bilden. Dies ist vorteilhaft, da landwirtschaftliche Arbeit häufig in geraden Bahnen verrichtet wird.

Diese Streckenabschnitte werden in Schritt b) auf Parallelität geprüft. Dabei ist die Fahrtrichtung, die sich aus der zeitlichen Reihenfolge der Positionsfixe entlang des Streckenabschnitts ergibt, nicht relevant. Parallel verlaufende Streckenabschnitte werden zu einem Gebiet zusammengefasst. Dies ist sinnvoll da landwirtschaftliche Arbeit häufig entlang parallel verlaufender Strecken erfolgt. Die Gebiete entsprechen jeweils einem bearbeiteten Innenfeld oder einem Vorgewende.

Die in Schritt a) erkannten und in Schritt b) in Gebieten zusammengefassten geraden Streckenabschnitte werden in Schritt c) verlängert und in Schritt d) geprüft, ob die Verlängerung in einem anderen Gebiet liegt. Falls dies der Fall ist wird in Schritt e) das Gebiet in dem der verlängerte Streckenabschnitt zu dem Gebiet zu dem der Streckenabschnitt gehört hinzugefügt. Dies ist vorteilhaft, da die Verlängerung eines geraden Streckenabschnitts im bearbeiteten Innenfeld häufig im Vorgewende liegt. Durch die Schritte c), d) und e) werden Innenfeld und Vorgewende zusammengefasst.

Um das so zusammengefasste Gebiet wird in Schritt f) eine geschlossene Feldgrenze bestimmt. Dabei wird zumindest eine äußere Feldgrenze bestimmt und optional zusätzlich eine oder mehrere innere Feldgrenzen. Innere Feldgrenzen ergeben sich bspw. wenn ein Feld ein Hindernis wie Bäume, Felsen oder Teiche umschließt.

In einer vorteilhaften Ausgestaltung wurden die Positionsfixe von einer einzigen Arbeitsmaschine aufgenommen. Dadurch wird sichergestellt, dass nicht Positionsfixe von unterschiedlichen auf einem Feld oder benachbarten Feldern arbeitenden Maschinen vermischt werden.

In einer alternativen Ausführungsform ist den Positionsfixen ein Identifikationsmerkmal der Arbeitsmaschine zugeordnet. Anhand des Identifikationsmerkmals können die Positionsfixe unterschiedlicher Maschinen auseinandergehalten werden. Dadurch können die geraden Streckenabschnitte der einzelnen Maschinen getrennt erfasst werden.

Überlappende Gebiete, die von unterschiedlichen Maschinen bearbeitet wurden, können zu einem Gebiet zusammengefasst werden. Dies kann automatisch geschehen, bspw. wenn der Überlapp eine vorbestimmte Größe überschreitet. Ebenso ist es möglich mehrere Maschinen manuell zusammenzufassen.

In einer Ausgestaltung gehören drei zeitlich aufeinander folgende Positionsfixe zu einem geraden Streckenabschnitt, wenn die zwei Vektoren zwischen jeweils zwei zeitlich aufeinander folgende Positionsfixe einen Winkel unterhalb eines vorbestimmten Maximalwinkels einschließen. Der Maximalwinkel ist dabei bevorzugt kleiner als 20°, besonders bevorzugt kleiner als 10°. Der Maximalwinkel wird bevorzugt nicht zu klein gewählt, da Abweichungen auch bspw. durch Ungenauigkeiten in der Erfassung der Positionsfixe entstehen können. Ebenso sind leichte Kurven während der Feldarbeit möglich. Enge Kurven sind hingegen ein Zeichen von Wendemanövern und Straßenfahrten.

In einer Ausgestaltung werden in Schritt b) nur parallele Streckenabschnitte zu Gebieten zusammengefasst, deren Normalabstand einen Grenzwert nicht überschreitet. Der Grenzwert ist dabei eine maximale Arbeitsbreite. Zufällig parallele Streckenabschnitte in großem Abstand werden so nicht zu Gebieten zusammengefasst. Der Grenzwert kann bspw. einem Identifikationsmerkmal der Arbeitsmaschine zugeordnet sein. Alternativ kann der Grenzwert manuell vorgegeben werden.

In einer Ausgestaltung werden die Gebiete in Innenfeld und Vorgewende eingeteilt. Die Unterteilung kann bspw. an Eigenschaften der parallelen Streckenabschnitte erfolgen. So wird ein Innenfeld häufig mit gleichmäßigem Abstand zwischen den Streckenabschnitten befahren, während dies im Vorgewende nicht der Fall ist. Alternativ können weitere mit den Positionsfixen verknüpfte Daten für die Einteilung genutzt werden.

In einer vorteilhaften Ausgestaltung werden in Schritt c) die Streckenabschnitte um einen Wert verlängert, der von dem Abstand zwischen zwei Positionsfixen auf dem Streckenabschnitt abhängt. Der Wert ist dabei umso größer je größer der Abstand zwischen zwei Positionsfixen ist. Der Abstand zwischen den Positionsfixen hängt dabei vom Messintervall der Positionsfixe und der Fahrgeschwindigkeit der Arbeitsmaschine ab.

In einer Ausgestaltung wird aus dem Normalabstand der parallelen Streckenabschnitte die Arbeitsbreite bestimmt und die Feldgrenze um eine halbe Arbeitsbreite vergrößert. Dies trägt der Tatsache Rechnung, dass der Satellitennavigationsempfänger innerhalb der Arbeitsbreite des Fahrzeugs meist in der Fahrzeugmitte liegt.

In einer vorteilhaften Ausgestaltung werden die Feldgrenzen um einen vorbestimmten Wert vergrößert und anschließend um den gleichen Wert verkleinert. Durch die Vergrößerung können Lücken innerhalb des Feldes geschlossen werden, die bspw. durch zufällige Schwankungen bei der Bestimmung der Positionsfixe entstehen können. Bei anschließenden Verkleinern werden diese Lücken nicht wieder geöffnet. Das Vergrößern und Verkleinern der Feldgrenzen ermöglicht also die einfache Eliminierung von Lücken, die durch Messfehler entstanden, innerhalb von Feldern.

In einer vorteilhaften Ausgestaltung werden die Positionsfixe vor Schritt a) mit einer Karte verglichen und Positionsfixe, die im Wesentlichen auf einer Straße liegen, bleiben in den Verfahrensschritten unberücksichtigt. Durch den Vergleich mit der Karte können Punkte, die auf einer parallel zum Feldrand verlaufenden Straße liegen, auf einfache Weise aus dem Verfahren ausgenommen werden.

In einer vorteilhaften Ausgestaltung liegen zu jedem Positionsfix weitere mit dem Positionsfix verknüpfte Daten vor, wobei aus den verknüpften Daten bestimmt wird ob an dem Positionsfix eine Feldarbeit verrichtet wurde und in den Verfahrensschritten nur Positionsfixe verarbeitet werden, an denen Feldarbeit verrichtet wurde. Die verknüpften Daten können bspw. Informationen über den Status der Arbeitsmaschine zum Zeitpunkt der Bestimmung des Positionsfixes sein. Die Daten werden vorzugsweise auf der Arbeitsmaschine mit den Positionsfixen verknüpft und zusammen mit den Positionsfixen abgespeichert und/oder an einen Zentralrechner verschickt. Alternativ können die Daten und die Positionsfixe jeweils mit einem Zeitstempel versehen werden und während des erfindungsgemäßen Verfahrens verknüpft werden.

In einer weiteren Ausgestaltung umfassen die verknüpften Daten den Leistungsbedarf der Arbeitsmaschine, Einstellungen von Arbeitsaggregaten der Arbeitsmaschine und/oder Messwerte von Sensoren der Arbeitsmaschine. Aus den Daten lässt sich mit großer Wahrscheinlichkeit feststellen, ob eine Feldarbeit verrichtet wurde.

Die Erfindung wird nachstehend anhand eines Ausführungsbeispiels näher erläutert. Die Figuren zeigen in
- Fig. 1:: eine Vielzahl von Positionsfixen,
- Fig. 2:: erkannte Streckenabschnitte,
- Fig. 3:: zusammengefasst Gebiete,
- Fig. 4:: Feldgrenzen mit Lücken aus Messfehlern und
- Fig. 5:: Feldgrenzen ohne Lücken.

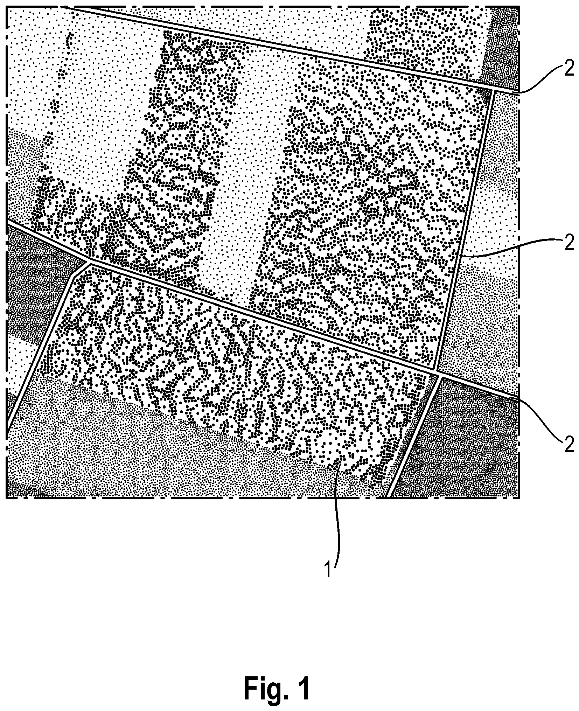

In Figur 1 sind eine Vielzahl von Positionsfixen 1 einer Arbeitsmaschine gezeigt. Vor der eigentlichen Analyse werden die Positionsfixe 1 mit einer Karte verglichen und die Positionsfixe 1, die im Wesentlichen auf einer Straße 2 liegen, werden bei der Analyse nicht berücksichtigt. Die anderen Positionsfixe 1 werden auf gerade Streckenabschnitte 3 hin analysiert. Als im Wesentlichen Gerade wird ein Streckenabschnitt angesehen, wenn eine Folge von Positionsfixen 1 keinen Winkel oberhalb eines Maximalwinkels aufweist.

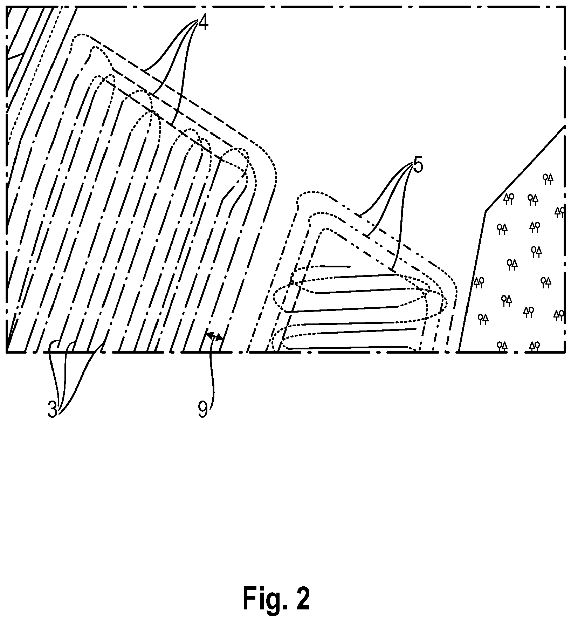

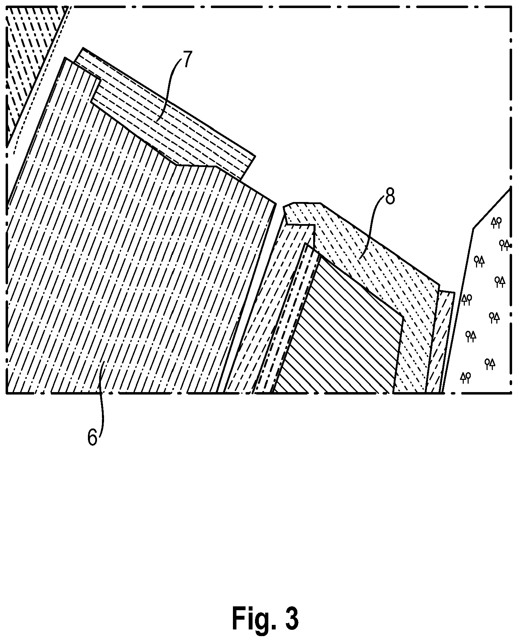

In Figur 2 sind erkannte gerade Streckenabschnitte 3, 4, 5 gezeigt. Die Streckenabschnitte 3, 4, 5 werden danach auf Parallelität überprüft. Dann wird für parallele Streckenabschnitte 3, 4, 5 der Normalabstand 9 bestimmt. Der Normalabstand ist die Länge einer Strecke von einem Streckenabschnitt zum anderen, die im Wesentlichen senkrecht zu den parallelen Streckenabschnitten verläuft. Ist der Normalabstand kleiner als ein Grenzwert, so werden die parallelen Streckenabschnitte 3, 4, 5 zu einem Gebiet 6, 7, 8 zusammengefasst. Die entstehenden Gebiete sind in Figur 3 dargestellt. Die Gebiete 6, 7, 8 können sowohl Innenfeld 6 als auch Vorgewende 7, 8 darstellen. Was ein Gebiet darstellt kann sich bspw. aus der Lage, Form und/oder Größe der Gebiete ergeben. Alternativ kann die Unterteilung in Vorgewende und Innenfeld auch anhand weiterer mit dem Positionsfix 1 verknüpfte Daten erfolgen, wenn solche Daten vorliegen.

Im nächsten Schritt werden Gebiete 6, 7, 8, die wahrscheinlich im selben Feld liegen zusammengefasst. Dazu werden die geraden Streckenabschnitte eines Gebietes 6 in gerader Linie verlängert. Der Wert der Verlängerung hängt dabei bevorzugt von dem Abstand zwischen den Positionsfixen 1 ab. Der Abstand zwischen den Positionsfixen 1 hängt wiederum von der Fahrgeschwindigkeit der Arbeitsmaschine während der Aufnahme der Positionsfixe 1 und dem Aufnahmeintervall, also dem zeitlichen Abstand zwischen den Positionsfixen 1 ab. Überlappt eine Verlängerung mit einem anderen Gebiet 7, so liegt dieses Gebiet wahrscheinlich im gleichen Feld wie der verlängerte Streckenabschnitt 6. Bevorzugt werden Streckenabschnitte 3 verlängert, die in einem Innenfeld 6 liegen. Verlängerungen von Streckenabschnitten eines Innenfeldes 6 überlappen häufig mit Gebieten, die Vorgewende 7 darstellen. Das Gebiet 7 in dem der verlängerte Streckenabschnitt liegt und das Gebiet zu dem der Streckenabschnitt 6 gehören zu einem Feld. Die Gebiete 6, 7 werden dann zu einem Feld zusammengefasst.

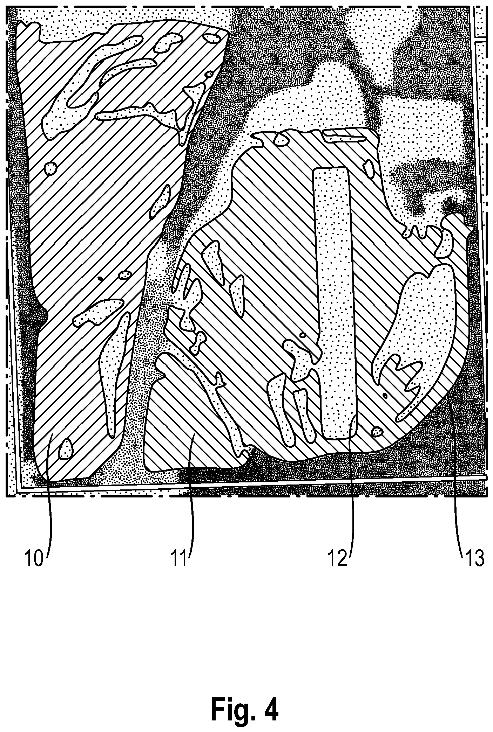

Zu den so bestimmten Feldern 10, 11 werden dann die Feldgrenzen 12, 13 ermittelt. Zu den Feldern wird der Mittelwert der Normalabstände 9 bestimmten. Dieser entspricht der Arbeitsbreite. Die Feldgrenze 12, 13 befindet sich eine halbe Arbeitsbreite außerhalb des äußersten Streckenabschnitts. In Figur 4 sind zwei Felder 10, 11 mit Feldgrenzen 12, 13 gezeigt. Feldgrenzen 12 im Inneren von Feldern 11 können dabei durch Bereiche entstehen, in denen die Arbeitsmaschine nicht war, durch Bereiche in denen kein Positionsfix 1 ermittelt werden konnte oder durch Messfehler bei der Bestimmung der Positionsfixe 1. Im ersten Fall ist die innere Feldgrenze 12 korrekt ermittelt worden. Fälle in denen keine Bestimmung eines Positionsfix 1 möglich war, lassen sich an einem ungewöhnlich großen Abstand zwischen Positionsfixen erkennen und die Lücke kann zum Feld 11 gezählt werden.

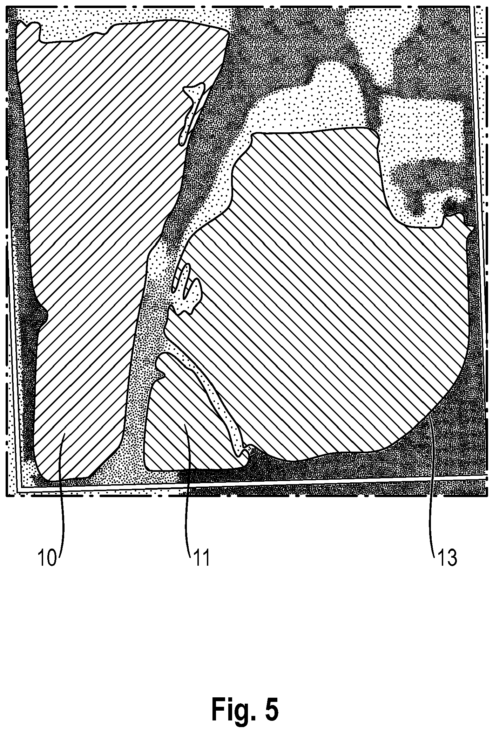

Zur Beseitigung von Lücken, die durch Messfehler bei der Bestimmung der Positionsfixe 1 entstanden sind, werden die Feldgrenzen 12, 13 vergrößert. Durch die Vergrößerung werden Lücken geschlossen und innere Feldgrenzen 12 verschwinden. Anschließend werden die Feldgrenzen 12, 13 um den gleichen Wert verkleinert. In Figur 5 sind zwei Felder 10, 11 mit geschlossenen Lücken dargestellt. Äußere Feldgrenzen 13 und korrekte innere Feldgrenzen 12 bleiben durch dieses Verfahren unverändert.

### Bezugszeichenliste

- 1: Positionsfixe
- 2: Straße
- 3: gerade Streckenabschnitte
- 4: gerade Streckenabschnitte
- 5: gerade Streckenabschnitte
- 6: Gebiet, Innenfeld
- 7: Gebiet, Vorgewende
- 8: Gebiet, Vorgewende
- 9: Normalabstand
- 10: Feld
- 11: Feld
- 12: Innere Feldgrenze
- 13: Äußere Feldgrenze

## Patentansprüche

1. Verfahren zum Erkennen von Feldgrenzen, umfassend die Schritte:
a) Analysieren einer Vielzahl von Positionsfixen (1) einer Arbeitsmaschine und zugehörigen Zeitstempeln auf im Wesentlichen gerade Streckenabschnitte (3, 4, 5),
b) Zusammenfassen von parallelen Streckenabschnitten (3, 4, 5) zu Gebieten (6, 7,8),
c) Verlängern der geraden Streckenabschnitte (3, 4, 5),
d) prüfen ob ein verlängerter Streckenabschnitt (3, 4, 5) in einem anderen Gebiet (6, 7, 8) liegt,
e) Zusammenfassen des Gebietes (6, 7, 8) in dem der verlängerte Streckenabschnitt liegt mit dem Gebiet (6, 7, 8) zu dem der Streckenabschnitt (3, 4, 5) gehört zu einem Feld (10, 11),
f) Bestimmen einer geschlossenen Feldgrenze (12, 13) um das Feld.

2. Verfahren nach Anspruch 1, wobei die Positionsfixe (1) von einer einzigen Arbeitsmaschine aufgenommen wurden.

3. Verfahren nach Anspruch 1, wobei den Positionsfixen (1) ein Identifikationsmerkmal der Arbeitsmaschine zugeordnet ist.

4. Verfahren nach einem der vorhergehenden Ansprüche, wobei drei zeitlich aufeinander folgende Positionsfixe (1) zu einem geraden Streckenabschnitt (3, 4, 5) gehören, wenn die zwei Vektoren zwischen jeweils zwei zeitlich aufeinander folgende Positionsfixe (1) einen Winkel unterhalb eines vorbestimmten Maximalwinkels einschließen.

5. Verfahren nach einem der vorhergehenden Ansprüche, wobei in Schritt b) nur parallele Streckenabschnitte (3, 4, 5) zu Gebieten (6, 7, 8) zusammengefasst werden, deren Normalabstand (9) einen Grenzwert nicht überschreitet.

6. Verfahren nach einem der vorhergehenden Ansprüche, wobei die Gebiete (6, 7, 8) in Innenfeld und Vorgewende eingeteilt werden.

7. Verfahren nach einem der vorhergehenden Ansprüche, wobei in Schritt c) die Streckenabschnitte (3, 4, 5) um einen Wert verlängert werden, der von dem Abstand zwischen zwei Positionsfixen (1) auf dem Streckenabschnitt (3, 4, 5) abhängt.

8. Verfahren nach einem der vorhergehenden Ansprüche, wobei aus dem Normalabstand (9) der parallelen Streckenabschnitte (3, 4, 5) die Arbeitsbreite bestimmt wird und die Feldgrenze (12, 13) um eine halbe Arbeitsbreite vergrößert wird.

9. Verfahren nach einem der vorhergehenden Ansprüche, wobei die Feldgrenzen (12, 13) um einen vorbestimmten Wert vergrößert werden und anschließend um den gleichen Wert verkleinert werden.

10. Verfahren nach einem der vorhergehenden Ansprüche, wobei die Positionsfixe (1) vor Schritt a) mit einer Karte verglichen werden und Positionsfixe (1), die im Wesentlichen auf einer Straße (2) liegen, in den Verfahrensschritten unberücksichtigt bleiben.

11. Verfahren nach einem der vorhergehenden Ansprüche, wobei zu jedem Positionsfix (1) weitere mit dem Positionsfix (1) verknüpfte Daten vorliegen, wobei aus den verknüpften Daten bestimmt wird ob an dem Positionsfix (1) eine Feldarbeit verrichtet wurde und in den Verfahrensschritten nur Positionsfixe (1) verarbeitet werden, an denen Feldarbeit verrichtet wurde.

12. Verfahren nach Anspruch 11, wobei die verknüpften Daten den Leistungsbedarf der Arbeitsmaschine, Einstellungen von Arbeitsaggregaten der Arbeitsmaschine und/oder Messwerte von Sensoren der Arbeitsmaschine umfassen.

## Claims

1. A method for detecting field boundaries, comprising the steps of:
a) analysing a plurality of position fixes (1) for a working machine and associated time stamps on substantially straight path sections (3, 4, 5),
b) combining parallel path sections (3, 4, 5) into regions (6, 7, 8),
c) extending the straight path sections (3, 4, 5),
d)testing whether an extended path section (3, 4, 5) lies in another region (6, 7, 8),
e) combining the regions (6, 7, 8) in which the extended path section lies with the region (6, 7, 8) to which the path section (3, 4, 5) belongs into a field (10, 11),
f) determining a closed field border (12, 13) around the field.

2. The method according to claim 1, wherein the position fixes (1) are taken from a single working machine.

3. The method according to claim 1, wherein an identifying feature of the working machine is associated with the position fixes (1).

4. The method according to one of the preceding claims, wherein three position fixes (1) in chronological succession belong to a straight path section (3, 4, 5) when the two vectors between two respective position fixes (1) in chronological succession enclose an angle which is below a predetermined maximum angle.

5. The method according to one of the preceding claims, wherein in step b), parallel path sections (3, 4, 5) are only combined into regions (6, 7, 8) when their normal separation (9) does not exceed a threshold value.

6. The method according to one of the preceding claims, wherein the regions (6, 7, 8) are divided into field interior and headland.

7. The method according to one of the preceding claims, wherein in step c), the path sections (3, 4, 5) are extended by a value which depends on the separation between two position fixes (1) on the path section (3, 4, 5).

8. The method according to one of the preceding claims, wherein the working width is determined from the normal separation (9) of the parallel path sections (3, 4, 5) and the field boundary (12, 13) is enlarged by one half of the working width.

9. The method according to one of the preceding claims, wherein the field boundaries (12, 13) are enlarged by a predetermined value and subsequently reduced by the identical value.

10. The method according to one of the preceding claims wherein, prior to step a), the position fixes (1) are compared with a map and position fixes (1) which substantially lie on a road (2) are not considered in the steps of the method.

11. The method according to one of the preceding claims, wherein further data linked to the position fix (1) are available for each position fix (1), wherein it is determined from the linked data whether field work has been carried out at the position fix (1) and in the steps of the method, only position fixes (1) at which field work has been carried out are processed.

12. The method according to claim 11, wherein the linked data comprise the power requirement for the working machine, settings for working assemblies of the working machine and/or measured values from sensors of the working machine.

## Revendications

1. Procédé de détection de limites de champ, incluant les étapes de :
a) analyse d'une pluralité de points localisés (1) d'une machine de travail et de marqueurs temporels associés sur des portions de trajet (3, 4, 5),
b) réunion de portions de trajet parallèles (3, 4, 5) en zones (6, 7, 8),
c) prolongation des portions de trajet rectilignes (3, 4, 5),
d) vérification si une portion de trajet prolongée (3, 4, 5) se trouve dans une autre zone (6, 7, 8),
e) réunion de la zone (6, 7, 8) où se trouve la portion de trajet prolongée avec la zone (6, 7, 8) à laquelle appartient la portion de trajet (3, 4, 5) en un champ (10, 11)
f) détermination d'une limite de champ fermée (12, 13) autour du champ.

2. Procédé selon la revendication 1, les points localisés (1) ayant été relevés par une machine de travail unique.

3. Procédé selon la revendication 1, aux points localisés (1) étant associée une caractéristique d'identification de la machine de travail.

4. Procédé selon une des revendications précédentes, trois points localisés chronologiquement successifs (1) appartenant à une portion de trajet rectiligne (3, 4, 5) si les deux vecteurs entre respectivement deux points localisés chronologiquement successifs (1) forment un angle inférieur à un angle maximal prédéterminé.

5. Procédé selon une des revendications précédentes, à l'étape (b) n'étant réunies en zones (6, 7, 8) que des portions de trajet parallèles (3, 4, 5) dont l'écartement normal (9) n'excède pas une valeur limite.

6. Procédé selon une des revendications précédentes, les zones (6, 7, 8) étant divisées en champ intérieur et en tournière.

7. Procédé selon une des revendications précédentes, à l'étape c) les portions de trajet (3, 4, 5) étant prolongées d'une valeur qui dépend de l'écartement entre deux points localisés (1) sur la portion de trajet (3, 4, 5).

8. Procédé selon une des revendications précédentes, la largeur de travail étant déterminée à partir de l'écartement normal (9) des portions de trajet parallèles (3, 4, 5), et la limite de champ (12, 13) étant augmentée d'une demi-largeur de travail.

9. Procédé selon une des revendications précédentes, les limites de champ (12, 13) étant augmentées d'une valeur prédéterminée et ensuite diminuées de la même valeur.

10. Procédé selon une des revendications précédentes, les points localisés (1) avant l'étape a) étant comparés avec une carte et les points localisés
(1) qui se trouvent sensiblement sur une route
(2) n'étant pas pris en compte dans les étapes de procédé.

11. Procédé selon une des revendications précédentes, à chaque point localisé (1) étant présentes d'autres données liées au point localisé (1), à partir des données liées étant déterminé si un travail en champ a été effectué au point localisé (1) et si dans les étapes de procédé ne sont traités que des points localisés (1) où un travail en champ a été effectué.

12. Procédé selon la revendication 11, les données liées incluant le besoin de puissance de la machine de travail, des réglages d'organes de travail de la machine de travail et/ou des valeurs mesurées de capteurs de la machine de travail.
